# EUROPÄISCHE PATENTSCHRIFT

(11) **EP 2 420 290 B1**
(45) Veröffentlichungstag und Bekanntmachung des Hinweises auf die Patenterteilung: **18.01.2017**
(21) Anmeldenummer: 10764726.5
(22) Anmeldetag: 14.04.2010
(51) Int. Cl.: A62B 1/22, A62B 99/00, B64D 19/00

(54) **VORRICHTUNG ZUR NOTFALLRETTUNG VON PERSONEN AUS OBJEKTEN IN GROSSER HÖHE (VERSCHIEDENE AUSFÜHRUNGEN)**
DEVICE FOR THE EMERGENCY LOWERING OF A PERSON FROM A HIGH-RISE OBJECT (VARIANT EMBODIMENTS)
DISPOSITIF DE DESCENTE D'URGENCE D'UNE PERSONNE À PARTIR D'UNE CONSTRUCTION DE GRANDE HAUTEUR (ET VARIANTES)

(30) Priorität: 15.04.2009 RU 2009114229
(43) Veröffentlichungstag der Anmeldung: 22.02.2012
(73) Patentinhaber: Obschestvo S Ogranichennoi Otvetstvennostyu "Kosmicheskie Sistemy Spaseniya", Moskovskaya obl. 141080 (RU)
(72) Erfinder: FILATOV, Andrei Vasilevich, Moskovskaya obl., 141080 (RU); METELEV, Yury Alekseevich, Moscow 123181 (RU); KULIK, Sergei Vasilyevich, Moscow 117607 (RU)
(74) Vertreter: Kietzmann, Manfred
(86) Internationale Anmeldenummer: PCT/RU2010/000171
(87) Internationale Veröffentlichungsnummer: WO 2010/120211

(56) Entgegenhaltungen:
- WO-A1-2005/094944
- DE-A1- 10 029 193
- KR-B1- 100 751 288
- RU-C1- 2 288 758
- RU-C2- 2 355 448
- RU-U1- 66 206
- RU-U1- 66 206
- US-B1- 6 607 166
- US-B1- 6 607 166

## Beschreibung

Die Erfindung betrifft Mittel zur Rettung von Personen und schlägt eine Vorrichtung zur Rettung von Personen in Notsituationen vor, vor allem zur Bergung von Personen aus den oberen Etagen von Hochhäusern bei Feuer bzw. anderen Notfällen.

Bekannt ist eine Rettungsvorrichtung auf dem Erdboden zur Aufnahme/zum Auffangen von Personen, die aus großer Höhe springen bzw. fallen, die enthält: eine Druckkammer, die flexible Röhren umfasst, die die Umgrenzungen der oberen und unteren Böden bilden und die durch Stützen des Halterahmens verbunden und von einer flexiblen Hülle umspannt sind, die eine horizontale, Stoß dämpfende Membran umfasst (RU Nr. 2150980, A62B1/22, veröffentlicht 1999).

Der Nachteil der Vorrichtung besteht darin, dass das Volumen des Halterahmens einen bedeutenden Teil des Gesamtvolumens der Kammer ausmacht.

Bekannt ist eine Vorrichtung zur Bergung einer Person aus großer Höhe, die enthält: einen Tornister mit Mitteln zu seiner Befestigung auf dem Rücken der zu rettenden Person, der über eine zwischenliegende Membran mit dem darin gefalteten Fallschirm verbunden ist, der in sich aufblasbare Kammern zur Ausbildung des Bodens des pneumatischen Halterahmens umfasst, die untereinander durch Bildung eines flexiblen Unterteils verbunden sind, das einen kegelförmigen Bremsschirm und eine Landegondel ausbildet, die aus aufblasbaren Kammern bestehen (RU, veröffentlichte Anmeldung Nr. 2003124165/12, 05.08.2003). Der Nachteil dieser Vorrichtung besteht in ihren beträchtlichen Abmessungen und Gewicht sowie in der geringen Effektivität.

Bekannt ist eine Vorrichtung zur Bergung einer Person aus großer Höhe, die enthält: ein tragbares Teil in Form eines Tornisters, der mit Mitteln zu seiner Befestigung auf dem Rücken der zu rettenden Person versehen ist und über eine Zwischenmembran mit dem darin gefalteten Fallschirm verbunden ist, der aufblasbare Kammern umfasst, die dazu bestimmt sind, bei deren Aufblasen den oberen und den unteren Boden des pneumatischen Halterahmens auszubilden, der ein flexibles Unterteil bildet, das bei dessen Verbindung mit den aufblasbaren Kammern einen kegelförmiger Bremsschirm ausbildet, sowie Mittel zum Öffnen des Fallschirms, die umfassen: die Gasquelle, die am Tornister befestigt und mit den aufblasbaren Kammern durch biegsame elastische Gasleitungen in Verbindung steht, und aufblasbare Kammern zur Ausbildung der Landegondel, wobei die aufblasbaren Kammern der Landegondel als unterer Boden und Stützen ausgeführt sind, die den Halterahmen bilden und mit dem unteren Boden des pneumatischen Halterahmens in Verbindung stehen, wobei die Landegondel mit vertikalen und horizontalen - einer unteren und einer oberen -Trennwänden versehen ist, die Hohlräume bilden, wobei die untere Trennwand Öffnungen hat, die obere Trennwand am unteren Boden des pneumatischen Halterahmens und am Tornister befestigt ist (RU Nr. 2288758, A62B1/00, B64D 25/14, veröffentlicht am 10.12.2006).

Der Nachteil dieser Vorrichtung besteht in ihren beträchtlichen Abmessungen und Gewicht sowie in der geringen Effizienz.

Bekannt ist eine Vorrichtung zur Bergung einer Person aus großer Höhe, die enthält: einen Tornister mit Mitteln zu seiner Befestigung auf dem Rücken der zu rettenden Person, dessen am Rücken dieser Person anliegender Teil als Stützelement ausgeführt ist und in dessen Innern ein aufblasbarer Halterahmen angeordnet ist, der eine aus der Gasquelle aufzublasende torusähnliche Kammer umfasst, die mit aufblasbaren Armen verbunden ist, die mit der oberen torusähnlichen Kammer der zylinderförmigen aufblasbaren Konstruktion verbunden sind, die aus übereinander angeordneten aufblasbaren torusähnlichen Kammern mit einem Durchmesser besteht, der kleiner als der Durchmesser der ersten o. g. aufblasbaren Kammer ist, um einen kegelförmigen Bremsschirm zu bilden, wobei an der oberen aufblasbaren torusähnlichen Kammer mit kleinerem Durchmesser das Stützelement des Tornisters befestigt ist, die bis zum atmosphärischen Druck aufblasbare zylinderförmige Kammer mit geeichten Öffnungen zum Ablassen des Überdrucks während ihrer äußeren Beanspruchung durch den Aufprall auf der Erdoberfläche, die unter dem Stützelement angebracht ist, an das die zu bergende Person festgeschnallt wird, im Innern des Hohlraums, der durch die zylinderförmige Anordnung der aufblasbaren torusähnlichen Kammern geringeren Durchmessers gebildet wird und von der Rückseite der angeordneten torusähnlichen Kammern mit großem Durchmesser hermetisch verschlossen wird, wobei das Stützelement des Tornisters als anatomischer Sitz (Sessel) nach der Rückenform des Menschen ausgeführt ist, der an der oberen aufblasbaren torusähnlichen Kammer mit geringerem Durchmesser mit Gurten befestigt wird, die so ausgeführt sind, dass sie bei Beanspruchung der Länge nach in Teile gleicher Festigkeit getrennt und geteilt werden können, und die Gasquelle für die aufblasbaren torusähnlichen Kammern in Form von Kaltgasgeneratoren ausgeführt ist, die in dem jeweiligen Hohlraum der aufblasbaren Kammer angeordnet sind, wobei zumindest in einem Arm ein Gasgenerator untergebracht ist, der zwei Kammern verbindet, die von den Räumen der anderen aufblasbaren Kammern und Arme isoliert sind (RU Nr. 66206, A62B1/00, B64D 25/14, veröffentlicht am 10.09.2007).

Der Nachteil dieser Vorrichtung besteht in ihren beträchtlichen Abmessungen und Gewicht sowie in der geringen Effizienz bei der Sicherstellung des Energieabbaus beim Aufsetzen des Systems mit einer Person auf dem Erdboden.

Diese Lösung wurde als Prototyp für die beanspruchten Gegenstände verwendet.

Die Vorteile der technischen Lösung, die mit der beanspruchten Erfindung erreicht werden sollen, bestehen in der Verringerung der Masse der Vorrichtung, in der Senkung des Gasverbrauchs zu deren Befüllung, in der Erhöhung ihrer Effektivität durch Vereinfachung der Konstruktion und in der Verbesserung der Sicherheit durch Verhinderung des Umkippens der Vorrichtung beim Aufsetzen.

Die genannten Vorteile der technischen Lösung gemäß dem ersten Ausführungsbeispiel werden dadurch erzielt, dass eine Vorrichtung zur Bergung einer Person aus großer Höhe vorgeschlagen wird, die auf dem Rücken der Person befestigt wird und eine von einer autonomen Gasbefüllungsquelle aufblasbare, zentrale torusähnliche Kammer enthält, an der eine Membran zur Platzierung der zu rettenden Person befestigt ist und die auf der einen Seite mit den aufblasbaren Armen, die beim Aufblasen am Kegel angeordnet sind und die untereinander mit aufblasbaren Stegen verbunden sind, und auf der anderen Seite mit einer aufblasbaren Dämpfungskonstruktion verbunden ist, die eine aufblasbare torusähnliche Kammer hat, die in Bezug auf die zentrale torusähnliche Kammer entgegensetzt zu den durch Stege verbundenen aufblasbaren Armen ausgerichtet ist, wobei die aufblasbare torusähnliche Kammer mit der zentralen torusähnlichen Kammer durch die aufblasbaren Arme in Verbindung steht und einen Durchmesser hat, der größer als der Durchmesser der zentralen torusähnlichen Kammer und kleiner als der Durchmesser des Kegelbodens ist, der durch die aufgerichteten aufblasbaren Arme gebildet wird, die untereinander mit Stegen verbunden sind, wobei zwischen den Armen und den torusähnlichen Kammern ein luftundurchlässiges Lochgewebe gespannt ist bzw. die Arme mit den torusähnlichen Kammern mit luftundurchlässigem gelochten Überzügen bezogen sind, um einen kegelförmigen Bremsschirm in Form von zwei stumpfen kegelförmigen Pyramiden mit einem gemeinsamen Boden im Bereich der zentralen torusähnlichen Kammer und mit entgegengesetzt ausgerichteten Böden verschiedengroßen Durchmessers zu bilden, wobei in der torusähnlichen Kammer der Dämpfungskonstruktion eine Membran gezogen ist und die autonome Gasbefüllungsquelle mit einer der aufblasbaren torusähnlichen Kammern bzw. mit einem der aufblasbaren Arme verbunden ist, die Innenräume (Hohlräume) aller torusähnlichen Kammern und der Arme untereinander verbunden sind und einen einheitlichen geschlossenen Raum bilden.

Die genannten Vorteile der technischen Lösung für das zweite Ausführungsbeispiel werden erfindungsgemäß dadurch erreicht, dass es eine Vorrichtung zur Bergung einer Person aus großer Höhe vorgeschlagen wird, die auf dem Rücken der zu bergenden Person befestigt wird und eine aus einer autonomen Gasbefüllungsquelle aufblasbare zentrale torusähnliche Kammer umfasst, die auf der einen Seite mit den aufblasbaren Armen, die mit der oberen aufblasbaren torusähnlichen Kammer verbunden sind, die einen größeren Durchmesser als die zentrale torusähnliche Kammer hat, und auf der anderen Seite mit der aufblasbaren Dämpfungskonstruktion verbunden ist, die aus der unteren aufblasbaren torusähnlichen Kammer besteht, wobei an der zentralen torusähnlichen Kammer eine Membran für die Platzierung der zu bergenden Person befestigt ist, die untere aufblasbare torusähnliche Kammer einen größeren Durchmesser als die zentrale torusähnliche Kammer und einen kleineren Durchmesser als die obere torusähnliche Kammer hat und mit der zentralen torusähnlichen Kammer durch aufblasbare Arme verbunden ist, wobei an der unteren torusähnlichen Kammer im Bereich ihres zentralen Hohlraums eine Membran befestigt ist, wobei zwischen den Armen jeder unteren und oberen torusähnlichen Kammer ein luftundurchlässiges Lochgewebe gespannt ist bzw. die Arme jeder torusähnlichen Kammer von außen mit luftundurchlässigen ausgelochten Hüllen überzogen sind, um zwei stumpfe kegelförmige Pyramiden mit einem gemeinsamen Boden und mit entgegengesetzt ausgerichteten Böden verschiedengroßen Durchmessers zu bilden, wobei die autonome Gasbefüllungsquelle mit einer der aufblasbaren torusähnlichen Kammern bzw. einem aufblasbaren Arm verbunden ist und die Innenräume aller torusähnlichen Kammern und Arme untereinander in Verbindung stehen und einen einheitlichen Raum bilden.

Die genannten Merkmale sind wesentlich und miteinander verbunden, wobei ein stabiler Komplex wesentlicher Merkmale gebildet wird, der hinlänglich ist, um die genannten Vorteile der technischen Lösung zu erzielen.

Die vorliegende Erfindung wird an konkreten Beispielen erläutert, die jedoch nicht die einzig möglichen sind, allerdings anschaulich demonstrieren, dass es möglich ist, den genannten Merkmalskomplex der beanspruchten technischen Lösung zu erzielen.
- Fig. 1:: Seitenansicht der Vorrichtung zur Bergung einer Person aus großer Höhe, erstes Ausführungsbeispiel;
- Fig. 2:: Draufsicht auf die Vorrichtung zur Bergung einer Person aus großer Höhe entsprechend Fig. 1;
- Fig. 3:: Seitenansicht der Vorrichtung zur Bergung einer Person aus großer Höhe, zweites Ausführungsbeispiel;
- Fig. 4:: Draufsicht auf die Vorrichtung zur Bergung einer Person aus großer Höhe entsprechend Fig. 3.

Erfindungsgemäß wird eine Vorrichtung zur Bergung einer Person aus großer Höhe, die ihrer Funktion nach eine aufblasbare Bremsvorrichtung ist, vorgeschlagen. Diese Vorrichtung ist für die individuelle Rettung von Personen und wertvollen Gütern, die sich in einer beliebigen Etage in Hochhäusern befinden und dringend evakuiert werden müssen, bestimmt. Eine derartige Vorrichtung kann gebaut werden, da sie sowohl ein effektives Bremsmittel beim Sinken in der Luft als auch eine Abfederungsvorrichtung in sich vereint. Beim Einsatz der Vorrichtung sind keine speziellen Fertigkeiten bezüglich der Steuerung erforderlich. Sie kann praktisch in Sekundenschnelle eingesetzt werden. Sie schützt beim Sinken vor einem Anprall an der Gebäudewand und vor hohen Temperaturen und offenem Feuer. Das Abfederungssystem (Dämpfungskonstruktion) gewährleistet ein sicheres Aufsetzen.

Die Vorrichtung ist die Hauptkomponente des Rettungssystems, da sie dazu bestimmt ist, dem System die entsprechende Form zu geben und die berechnete Sink- und Landungsgeschwindigkeit zu gewährleisten. Die Vorrichtung besteht aus zwei Teilen: der Hauptstufe, die die Form eines "auf den Kopf gestellten bzw. umgedrehten stumpfen Kegels" hat, und der Zusatzstufe, die ebenfalls die Form eines stumpfen Kegels, jedoch einen erheblich größeren Durchmesser hat (sie ist die Dämpfungsvorrichtung). Im aufgeblasenen, entfalteten einsatzbereiten Zustand hat die Vorrichtung die Form von zwei stumpfen Kegeln, die entgegengesetzt miteinander verbunden sind, mit verschieden großen Durchmessern der Böden; den kleinen Boden beider Kegel bildet die zentrale torusähnliche Kammer. In dieser Ausführung ist die Vorrichtung aerodynamisch stabil und selbstorientierend im Flug, sodass sie beim Sinken stets die Tendenz zum Umdrehen in dem Sinne hat, dass sich der große Kegel oben und der kleine Kegel unten befinden.

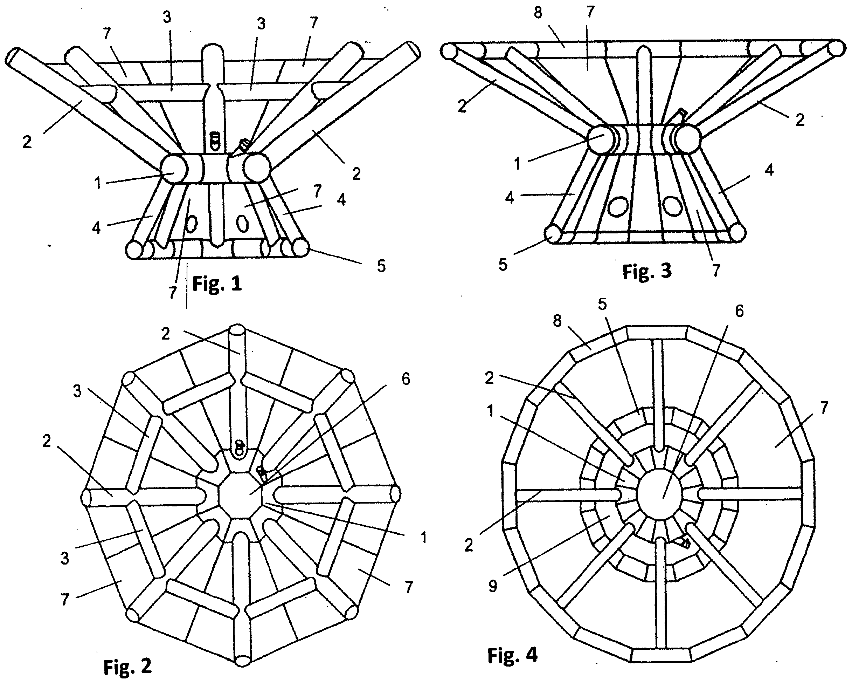

Die Vorrichtung zur Bergung einer Person aus großer Höhe in der ersten Ausführungsvariante (Fig. 1, 2) enthält ein Mittel zur Befestigung auf dem Rücken der zu rettenden Person und umfasst die aus der Gasquelle aufzublasende zentrale torusähnliche Kammer 1, die auf der einen Seite mit den aufblasbaren Armen 2, die beim Aufblasen am Kegelmantel angeordnet sind und untereinander durch aufblasbare Stege 3 verbunden sind, und auf der anderen Seite mit der aufblasbaren Dämpfungskonstruktion verbunden ist, die aus den Armen 4 der unteren aufblasbaren torusähnlichen Kammer 5 besteht, wobei an der zentralen torusähnlichen Kammer 1 die Membran 6 zur Platzierung der zu rettenden Person befestigt ist. Die untere aufblasbare torusähnliche Kammer 5 hat einen Durchmesser, der größer ist als der Durchmesser der zentralen torusähnlichen Kammer 1 und kleiner als der Durchmesser des Kegelbodens, der durch die am Kegel aufgerichteten Arme 2 gebildet wird, und mit der zentralen torusähnlichen Kammer 1 durch die aufblasbaren Arme 4 verbunden ist.

Zwischen den Armen 2 bzw. den Armen 4 der torusähnlichen Kammern ist jeweils ein luftundurchlässiges Gewebe 7 gespannt bzw. die Arme mit den torusähnlichen Kammern sind mit luftundurchlässigen Hüllen überzogen. Das luftundurchlässige Gewebe bzw. die luftundurchlässigen Hüllen sind gelocht.

In der unteren torusähnlichen Kammer ist eine Membran gespannt (nicht dargestellt), um zwei stumpfe kegelförmige Pyramiden mit einem gemeinsamen Boden im Bereich der zentralen torusähnlichen Kammer zu bilden, und mit entgegengesetzt ausgerichteten Böden verschiedengroßen Durchmessers für die Bildung des kegelförmigen Bremsschirms.

Die autonome Gasbefüllungsquelle ist mit einer der aufblasbaren torusähnlichen Kammern bzw. mit einem aufblasbaren Arm verbunden, die Innenräume aller torusähnlichen Kammern und Arme stehen ihrerseits untereinander in Verbindung und bilden einen einzigen Raum.

Nachstehend wird die konkrete Ausführung der ersten Variante betrachtet.
In der ersten Ausführungsvariante weist die Vorrichtung (Fig. 1, 2) Mittel zur Befestigung auf dem Rücken der zu rettenden Person (ausgeführt in Form eines Tornisters, nicht dargestellt) auf. Ferner umfasst die Vorrichtung eine aus der Gasquelle aufzublasende zentrale torusähnliche Kammer 1, die auf der einen Seite mit den aufblasbaren Armen 2, die untereinander durch aufblasbare Stege 3 mit Bildung der oberen aufblasbaren torusähnlichen Kammer mit einem Durchmesser, der größer ist der Durchmesser der zentralen torusähnlichen Kammer 1 verbunden sind, und auf der anderen Seite mit der aufblasbaren Dämpfungskonstruktion verbunden ist, die aus der unteren aufblasbaren torusähnlichen Kammer 5 besteht. An der zentralen torusähnlichen Kammer 1 ist die Membran 6 befestigt, um die zu bergende Person zu platzieren. Die untere aufblasbare torusähnliche Kammer 5 hat einen Durchmesser, der größer als der Durchmesser der zentralen torusähnlichen Kammer 1 und kleiner als der Durchmesser der oberen torusähnlichen Kammer und ist mit der zentralen torusähnlichen Kammer durch die aufblasbaren Arme 4 verbunden. Zwischen den Armen 2 und den Armen 4 der torusähnlichen Kammern ist ein luftundurchlässiges Gewebe 7 gespannt, um zwei stumpfe kegelförmige Pyramiden mit einer gemeinsamen Basis und mit entgegengesetzt angeordneten Böden verschiedengroßen Durchmessers zur Entstehung eines kegelförmigen Bremsschirms zu bilden. Die Hohlräume der Arme stehen untereinander durch Überströmung und auch mit der autonomen Gasquelle in Verbindung.

Der obere Kegel ist dazu bestimmt, eine effektive aerodynamische Bremswirkung und Lagestabilisierung der Vorrichtung im Flug zu erzielen, und hat die Form eines "auf den Kopf gestellten stumpfen Kegels", der durch die zentrale torusähnliche Kammer 1 und die Arme 2 mit den Stegen 3 gebildet wird.

Der obere und der untere Kegel werden durch aufblasbare luftdichte Arme gebildet, die entlang des Kegelmantels angeordnet sind und mit einer kegelförmigen, luftundurchlässigen Hülle überzogen sind, wobei die Kegel streng genommen zu Pyramiden werden, denen Vielecke mit einer Eckenzahl entsprechend der Zahl der Arme, von 6 bis 16, in unserem Fall 8, zugrunde liegen.

Die Arme des oberen und des unteren Kegels und die zentrale Kammer stehen miteinander durch Gasüberströmung in Verbindung und bilden einen einheitlichen Raum, der isoliert und luftdicht abgeschlossen ist. Die Vorrichtung wird unter Überdruck mit Gas befüllt, wodurch sie ihre Form während des Sinkens nicht verändert. Die Außenseite der Vorrichtung kann mit einem Wärmeschutzüberzug versehen sein, der die Sicherheit beim Durchgang durch offenes Feuer gewährleistet.

Der untere Kegel soll eine effektive aerodynamische Bremsung und Stabilisierung der Lage der Vorrichtung im Flug gewährleisten. Er besteht aus den geneigt angeordneten zylindrischen Armen 4, die einen Kegel bilden und untereinander durch die untere aufblasbare Kammer 5 verbunden sind. Der obere Kegel hat die Form eines "Konus", der durch die zentrale torusähnliche Kammer 1 und die Arme 2 mit den Stegen 3 gebildet wird.

Der untere und der zentrale Torus sind mit einem luftundurchlässigen Gewebe (Material) an den unteren Grenzen der Tori geschlossen, wobei an den Armen des oberen Kegels von der Innenseite (von der Seite der Symmetrieachse der Vorrichtung) ebenfalls ein luftundurchlässiges Gewebe (Material) befestigt ist, das einige kalibrierte Öffnungen zur Verbindung des Innenraums des "Luftsacks" (Airbags) mit der Atmosphäre hat. Bei der Befüllung des Halterahmens der Vorrichtung (Tori, Arme, Stege) mit Gas mittels des autonomen Befüllungssystems bis zum Überdruck tritt während der Entfaltung der Vorrichtung aus dem zusammengelegten Zustand in den Dämpfungs"airbag" Frischluft (aus der Atmosphäre) ein und der obere Kegel nimmt die vorgegebene Einsatzform an.

Die Person wird im Sitz (Sessel) auf der Vorrichtungsmembran platziert. Durch ein Anschnallsystem wird die Person mit dem Rücken in den Sitz gezogen. Der Sitz ist Teil des Tornisters, in den die Vorrichtung mit allen ihren Systemen eingepackt ist. Der Sitz hat die anatomische Form des menschlichen Rückens, um während des Aufsetzens einen gleichmäßigen Druck auf die Person zu gewährleisten, und ist fest am tragenden Torus befestigt.

Das Abfederungssystem (Dämpfungssystem der Vorrichtung) soll die Stoßüberlastung zum Zeitpunkt des Aufsetzens auf ein ungefährliches Maß verringern und funktioniert folgendermaßen:
Wenn die untere Kammer die Landungsfläche berührt, verliert der untere Torus angesichts der geringen Masse durch die Biegsamkeit der Arme seine Geschwindigkeit im Koordinatensystem, der Landungsfläche, so dass diese praktisch bei Null liegt. Dabei bewegen sich die Person im Sitz, die zentrale Kammer und der obere Kegel wegen der großen Masse weiter in Richtung Landungsfläche. Dabei kommt es, da die Biegsamkeit der unteren Arme bei Beanspruchung auf Druck begrenzt ist, zum "Bruch der Arme" bzw. zu einer biegsamen Verformung der Arme des unteren Kegels. Im Moment des "Bruchs" der Arme des unteren Kegels wird die Geschwindigkeit der Person mit dem Sitz und dem tragenden Torus wesentlich verringert, die Bewegung in Richtung Landungsfläche setzt sich jedoch fort. Im Weiteren wird der Dämpfungs"airbag" unter beträchtlichen Verschiebungen verformt; infolgedessen erhöht sich in seinem Innern der Druck, wobei gilt: Je höher die Bewegungsgeschwindigkeit der Person mit dem Sitz bzw. mit dem tragenden Torus ist, desto stärker erhöht sich der Überdruck im Dämpfungs"airbag". Indem der Bag auf den tragenden Torus mit dem an ihm befestigten gasundurchlässigen Material einwirkt, entwickelt der Überdruck im Bag eine zusätzliche Beanspruchung, abgesehen von der Biegsamkeit der Arme, die die kinetische Energie der Person mit dem Sitz endgültig vernichtet, was zum vollständigen Halt des Letzteren führt. Es ist hervorzuheben, dass je nach Erhöhung des Überdrucks im Dämpfungs"airbag" über die kalibrierten Öffnungen Luft aus dem Airbag in die Atmosphäre entweicht, wobei gilt: Je höher der Überdruck im Innern des Bags ist, desto höher ist die Geschwindigkeit des Luftentweichens, was zur Stabilisierung bzw. Verringerung des Überdrucks im Bag führt. Bei richtiger Wahl der Anzahl, der Durchmesser und der Lage dieser Öffnungen kann die Überbeanspruchung, die die Person beim Aufsetzen erfährt, im Rahmen zulässiger Größen gehalten werden. Somit ist das Dämpfungssystem universell und ermöglicht es, ein Aufsetzen der Person jedweder Masse in den vorgegebenen Grenzen sicherzustellen.

Der Sitz ist dazu bestimmt, die Person während des Fluges liegend zu platzieren und zu fixieren. Die Person wird durch das Anschnallsystem mit dem Rücken in den Sitz hineingezogen. Der Sitz ist Teil des Tornisters, in den die Vorrichtung mit allen ihren Systemen eingepackt ist. Der Sitz hat die anatomische Form des menschlichen Rückens, um während der Landung einen gleichmäßigen Druck auf die Person zu gewährleisten. Der Sitz ist ein lasttragendes Element und wird mittels lösbarer Elemente am tragenden Torus befestigt. Die Person, die im Sitz platziert wird, wird mit einem Anschnallsystem fixiert. Der Tornister wird über den Rücken aufgezogen.

Während des Fluges der Vorrichtung wird eine effektive aerodynamische Bremsung bis auf eine Geschwindigkeit von unter 11 m/s sichergestellt. Die Landelast bei Berührung der Erdoberfläche wird durch das Dämpfungssystem gedämpft. Die Überlastung beim Aufsetzen steigt nicht über 16 Einheiten und wirkt weniger als 0,5 min lang.

Bei der zweiten Ausführungsvariante ist die zentrale torusähnliche Kammer auf der einen Seite mit den aufblasbaren Armen verbunden, die am Kegelmantel beim Aufblasen angeordnet sind und untereinander mit aufblasbaren Streben verbunden sind, ohne die obere torusähnliche Kammer zu bilden.

Die Vorrichtung für die Bergung einer Person aus großer Höhe enthält in der zweiten Ausführungsform (Fig. 3, 4) auch ein Mittel zur Befestigung am Rücken der zu rettenden Person (in Form eines Tornisters, nicht dargestellt), das eine aus der Gasquelle aufzublasende zentrale torusähnliche Kammer 1 umfasst, die auf der einen Seite mit den aufblasbaren Armen 2, die mit der oberen aufblasbaren torusähnlichen Kammer 8 in Verbindung stehen, die einen größeren Durchmesser als die zentrale torusähnliche Kammer 1 hat, und auf der anderen Seite mit der aufblasbaren Konstruktion verbunden ist, die aus der unteren aufblasbaren torusähnlichen Kammer 5 besteht. An der zentralen torusähnlichen Kammer 1 ist die Membran 6 befestigt, um die zu bergende Person zu platzieren, und hat eine autonome Quelle für die Gasbefüllung (nicht dargestellt). Die untere aufblasbare torusähnliche Kammer 5 hat einen Durchmesser, der größer ist als der Durchmesser der zentralen torusähnlichen Kammer 1 und kleiner als der Durchmesser der oberen torusähnlichen Kammer 8, und ist mit der zentralen torusähnlichen Kammer 1 durch aufblasbare Arme 4 verbunden. Zwischen den Armen jeder unteren und oberen torusähnlichen Kammer ist ein luftundurchlässiges Gewebe 7 gespannt bzw. die Arme jeder torusähnlichen Kammer sind mit luftundurchlässigen Hüllen überzogen. Das luftundurchlässige Gewebe 7 bzw. die luftundurchlässigen Hüllen sind gelocht.

An der unteren torusähnlichen Kammer 5 ist von unten die Membran 9 befestigt, um zwei stumpfe Kegelpyramiden mit einem gemeinsamen Basis und mit entgegengesetzt angeordneten Böden verschiedengroßen Durchmessers zu bilden, sodass ein kegelförmiger Bremsschirm entsteht.

Die autonome Quelle zur Gasbefüllung steht mit einer der aufblasbaren torusähnlichen Kammern bzw. mit einem der aufblasbaren Arme in Verbindung. Die Innenräume aller torusähnlichen Kammern und Arme stehen ihrerseits untereinander in Verbindung und bilden einen einheitlichen Raum.

Die Konstruktion in der zweiten Ausführungsvariante funktioniert analog der vorher betrachteten Konstruktion der ersten Variante.

Die vorliegende Erfindung ist gewerblich anwendbar, kann unter Einsatz von Materialien und Technologien hergestellt werden, die bei der Produktion von
Kraftfahrzeugsicherheitssystemen eines aus den Gasgeneratoren zu befüllenden Typs Airbag Verwendung finden.

## Patentansprüche

1. Vorrichtung zur Bergung einer Person aus großer Höhe, die am Rücken einer Person befestigt wird und eine von einer autonomen Gasbefüllungsquelle aufzublasende zentrale torusähnliche Kammer (1) umfasst, an der eine Membran (6) befestigt ist, um die zu bergende Person zu platzieren, und die auf der einen Seite mit aufblasbaren Armen (2), die beim Aufblasen am Kegelmantel angeordnet und untereinander mit aufblasbaren Stegen (3) verbunden sind, und auf der anderen Seite mit der aufblasbaren Dämpfungs-konstruktion verbunden ist, die eine aufblasbare torusähnliche Kammer (5) hat, die in Bezug auf die zentrale torusähnliche Kammer (1) entgegengesetzt zu den mit Stegen (3) verbundenen aufblasbaren Armen (2) angeordnet ist, **dadurch gekennzeichnet, dass** die aufblasbare torusähnliche Kammer (5) mit der zentralen torusähnlichen Kammer (1) durch aufblasbare Arme (4) in Verbindung steht und einen Durchmesser hat, der größer als der Durchmesser der zentralen torusähnlichen Kammer (1) und kleiner als der Durchmesser des Bodens des Kegels ist, der durch die sich beim Aufblasen aufrichtenden Arme (2) gebildet wird, die untereinander mit Stegen (3) verbunden sind, wobei zwischen den Armen (2 bzw. 4) jeder torusähnlichen Kammer ein luftundurchlässiges Gewebe (7) gespannt ist bzw. die Arme (2 bzw.4) mit den torusähnlichen Kammern mit luftundurchlässigen Hüllen überzogen sind, zur Bildung eines kegelförmigen Bremsschirms in Form von zwei stumpfen kegelförmigen Pyramiden mit einer gemeinsamen Basis im Bereich der zentralen torusähnlichen Kammer (1) und mit entgegengesetzt angeordneten Böden verschiedengroßen Durchmessers, in der torusähnlichen Kammer der Dämpfungskonstruktion eine Membran gezogen und das luftundurchlässige Gewebe der Dämpfungskonstruktion gelocht ist, die autonome Gasbefüllungsquelle mit einer der aufblasbaren torusähnlichen Kammern (1, 5) oder mit einem der aufblasbaren Arme (2, 4) in Verbindung steht, die Innenräume aller torusähnlichen Kammern und Arme untereinander verbunden sind und einen einheitlichen geschlossenen Raum bilden.

2. Vorrichtung zur Bergung einer Person aus großer Höhe, die am Rücken der zu rettenden Person befestigt wird und eine aus einer autonomen Gasbefüllungsquelle aufzublasende zentrale torusähnliche Kammer (1) umfasst, die auf der einen Seite mit den aufblasbaren Armen (2), die mit der oberen aufblasbaren torusähnlichen Kammer (8) verbunden sind, die einen größeren Durchmesser als die zentrale torusähnliche Kammer (1) hat, und auf der anderen Seite mit der aufblasbaren Dämpfungskonstruktion verbunden ist, die aus der unteren aufblasbaren torusähnlichen Kammer (5) besteht, wobei an der zentralen torusähnlichen Kammer (1) die Membran für die Platzierung der zu bergenden Person befestigt ist, **dadurch gekennzeichnet, dass** die untere aufblasbare torusähnliche Kammer (5) einen Durchmesser hat, der größer ist als der Durchmesser der zentralen torusähnlichen Kammer (1) und kleiner als der Durchmesser der oberen torusähnlichen Kammer (2), und mit der zentralen torusähnlichen Kammer (1) durch aufblasbare Arme (4) verbunden ist, an der unteren torusähnlichen Kammer (5) im Bereich des zentralen Hohlraums derselben eine Membran (9) befestigt ist, wobei zwischen den Armen (2 bzw. 4) jeder unteren und oberen torusähnlichen Kammer (5, 8) ein luftundurchlässiges Gewebe (7) gespannt ist oder die Arme (2 bzw. 4) jeder torusähnlichen Kammer von außen mit luftundurchlässigen Hüllen überzogen sind, zur Bildung von zwei stumpfen Pyramiden mit einem gemeinsamen Basis und mit entgegengesetzt angeordneten Böden verschiedengroßen Durchmessers, die autonome Quelle für die Gasbefüllung mit einer der aufblasbaren torusähnlichen Kammern (1, 5, 8) oder mit einem der aufblasbaren Arme (2, 4) in Verbindung steht, die Innenräume aller torusähnlichen Kammern und Arme untereinander verbunden sind und einen einheitlichen Raum bilden, und das luftundurchlässige Gewebe der aufblasbaren Dämpfungskonstruktion gelocht ist.

## Claims

1. An apparatus for the emergency lowering of a person from a high-rise building which is fastened on the person's back and includes a central toroidal chamber (1) which can be inflated by an independent gas-filling source, to which central toroidal chamber a membrane (6) is attached for accommodating the person to be lowered, and which chamber is connected on the one side to inflatable shafts (2) which, upon inflation, are arranged in a cone and which are interconnected by inflatable connectors (3), and which chamber is connected on the other side to an inflatable damping structure which has an inflatable toroidal chamber (5) which is arranged in an opposite direction to the inflatable shafts (2) connected to connectors (3) with respect to the central toroidal chamber (1), **characterized in that** the inflatable toroidal chamber (5) is connected to the central toroidal chamber (1) by means of inflatable shafts (4) and has a diameter which is greater than the diameter of the central toroidal chamber (1) and is less than the diameter of the base of the cone which is formed by the shafts (2) which are straightened out upon inflation, which are interconnected by connectors (3), wherein an air-impermeable fabric (7) is stretched between the shafts (2 or 4) of each toroidal chamber or the shafts (2 or 4) together with the toroidal chambers are covered by air-impermeable protective covers, in order to form a conical deceleration shield in the form of two truncated conical pyramids with a common base in the area of the central toroidal chamber (1) and with bases of different diameter arranged in opposite directions, a membrane is stretched in the toroidal chamber of the damping structure and the air-impermeable fabric of the damping structure is perforated, the independent gas source is connected to one of the inflatable toroidal chambers (1, 5) or is connected to one of the inflatable shafts (2, 4), the internal areas of all the toroidal chambers and the shafts are connected to one another and form a single closed area.

2. An apparatus for the emergency lowering of a person from a high-rise building which is fastened on the back of the person to be rescued and includes a central toroidal chamber (1) which can be inflated from an independent gas-filling source, which chamber is connected on the one side to the inflatable shafts (2) which are connected to the top inflatable toroidal chamber (8) which has a greater diameter than the central toroidal chamber (1), and which chamber is connected on the other side to the inflatable damping structure which consists of the bottom toroidal inflatable chamber (5), wherein the membrane for accommodating the person to be lowered is attached to the central toroidal chamber (1), **characterized in that** the bottom toroidal inflatable chamber (5) has a diameter which is greater than the diameter of the central toroidal chamber (1) and is less than the diameter of the top toroidal chamber (2), and is connected to the central toroidal chamber (1) by inflatable shafts (4), a membrane (9) is attached to the bottom toroidal chamber (5) in the area of the central cavity of the same, wherein an air-impermeable fabric (7) is stretched between the shafts (2 or 4) of each bottom and top toroidal chamber (5, 8) or the shafts (2 or 4) of each toroidal chamber are covered from externally by air-impermeable protective covers, in order to form two truncated pyramids with a common base and with bases of different diameter arranged in opposite directions, the independent source for filling with gas is connected to one of the inflatable toroidal chambers (1, 5, 8) or to one of the inflatable shafts (2, 4), the internal areas of all the toroidal chambers and shafts are connected to one another and form a single closed area, and the air-impermeable fabric of the inflatable damping structure is perforated.

## Revendications

1. Dispositif de descente d'urgence d'une personne d'une grande hauteur, lequel est fixé sur le dos d'une personne et comprend une chambre centrale (1) de type torique gonflable par une source de remplissage de gaz autonome, à laquelle une membrane (6) est fixée, afin de placer la personne devant être descendue, et lequel est relié, sur un côté, à des bras gonflables (2), lesquels sont disposés sur l'enveloppe conique lors du gonflage et reliés entre eux par des montants gonflables (3), et, de l'autre côté, à la construction d'amortissement gonflable, laquelle a une chambre gonflable (5) de type torique, laquelle est disposée à l'opposé des bras gonflables (2) reliés par des montants (3), par rapport à la chambre centrale (1) de type torique, **caractérisé en ce que** la chambre gonflable (5) de type torique est en connexion avec la chambre centrale (1) de type torique par des bras gonflables (4) et a un diamètre supérieur au diamètre de la chambre centrale (1) de type torique et inférieur au diamètre du fond du cône, lequel est formé par les bras (2) se dressant lors du gonflage, lesquels sont reliés entre eux par des montants (3), un tissu imperméable à l'air (7) étant tendu entre les bras (2 ou 4) de chaque chambre de type torique ou les bras (2 ou 4) étant recouverts par des enveloppes imperméables à l'air, avec les chambres de type torique, pour la formation d'un parachute de freinage conique, sous la forme de deux pyramides coniques tronquées avec une base commune dans la zone de la chambre centrale (1) de type torique et avec des fonds de diamètres de tailles différentes disposés de façon opposée, une membrane étant tendue dans la chambre de type torique de la construction d'amortissement et le tissu imperméable à l'air de la construction d'amortissement étant perforé, la source de remplissage de gaz autonome étant en connexion avec l'une des chambres gonflables (1, 5) de type torique ou avec l'un des bras gonflables (2, 4), les espaces intérieurs de tous les bras et de toutes les chambres de type torique étant reliés entre eux et formant un espace fermé uniforme.

2. Dispositif de descente d'urgence d'une personne d'une grande hauteur, lequel est fixé sur le dos de la personne devant être descendue et comprend une chambre centrale (1) de type torique gonflable par une source de remplissage de gaz autonome, lequel est relié, sur un côté, aux bras gonflables (2), lesquels sont reliés à la chambre gonflable supérieure (8) de type torique, laquelle a un diamètre supérieur à la chambre centrale (1) de type torique, et, de l'autre côté, à la construction d'amortissement gonflable, laquelle se compose de la chambre gonflable inférieure (5) de type torique, la membrane pour le placement de la personne devant être descendue étant fixée sur la chambre centrale (1) de type torique, **caractérisé en ce que** la chambre gonflable inférieure (5) de type torique a un diamètre supérieur au diamètre de la chambre centrale (1) de type torique et inférieur au diamètre de la chambre supérieure (2) de type torique, et est reliée à la chambre centrale (1) de type torique par des bras gonflables (4), une membrane (9) étant fixée à la chambre inférieure (5) de type torique dans la zone de la cavité centrale de celle-ci, un tissu (7) imperméable à l'air étant tendu entre les bras (2 ou 4) de chaque chambre inférieure et supérieure (5, 8) de type torique ou les bras (2 ou 4) de chaque chambre de type torique étant recouverts de l'extérieur par des enveloppes imperméables à l'air, pour la formation de deux pyramides coniques tronquées avec une base commune et avec des fonds de diamètre de tailles différentes disposés de façon opposée, la source autonome pour le remplissage de gaz étant en connexion avec l'une des chambres gonflables (1, 5, 8) de type torique ou avec l'un des bras gonflables (2, 4), les espaces intérieurs de tous les bras et de toutes les chambres de type torique étant reliés entre eux et formant un espace uniforme, et le tissu imperméable à l'air de la construction d'amortissement gonflable étant perforé.
